# FASCICULE DE BREVET EUROPEEN

(11) **EP 1 849 986 B1**
(45) Date de publication et mention de la délivrance du brevet: **30.06.2010**
(21) Numéro de dépôt: 07107095.7
(22) Date de dépôt: 27.04.2007
(51) Int. Cl.: F02K 1/82, F01D 25/14, F01D 25/26

(54) **Turboréacteur comprenant un canal de post combustion refroidi par un flux de ventilation a débit variable**
Turbinentriebwerk mit einem Nachbrennkanal, der durch einen Lüftungsstrom verstellbarer Stärke gekühlt wird
Jet engine comprising an afterburner cooled by a ventilation flow with variable flow

(30) Priorité: 28.04.2006 FR 0651522
(43) Date de publication de la demande: 31.10.2007
(73) Titulaire: SNECMA, 75015 Paris (FR)
(72) Inventeur: Bunel, Jacques Marcel Arthur, 94260 Fresnes (FR); Cortes, Thierry André Emmanuel, 91800 Brunoy (FR); Page, Alain Pierre, 91230 Montgeron (FR); Vagner Fabienne, 28100 Dreux (FR)
(74) Mandataire: Poulin, Gérard

(56) Documents cités:
- US-A- 5 131 222
- US-A- 5 209 059
- US-A1- 2005 091 964

## Description

### DOMAINE TECHNIQUE

La présente invention se rapporte de façon générale à un arrière-corps pour turboréacteur d'aéronef comprenant un canal de post combustion délimité par un carter de post combustion, qui est refroidi par un flux de ventilation circulant entre ce carter et une chemise de protection thermique.

L'invention se rapporte également à un turboréacteur pour aéronef comportant cet arrière-corps, ainsi qu'à un aéronef comportant au moins un tel turboréacteur.

### ETAT DE LA TECHNIQUE ANTERIEURE

De l'art antérieur, on connaît effectivement une partie arrière-corps de turboréacteur équipée d'un canal annulaire de ventilation défini entre le carter de post combustion et sa chemise de protection thermique multiperforée, ce canal annulaire étant donc destiné à être traversé par un flux de ventilation servant au refroidissement du carter de post combustion. A titre indicatif, en partie aval de ce canal annulaire, le carter de post combustion est susceptible d'atteindre des températures élevées de l'ordre de 900°C, notamment lorsque le turboréacteur fonctionne en régime plein gaz avec post combustion, ces températures pouvant alors s'abaisser aux alentours de 700°C lorsque le turboréacteur fonctionne en régime plein gaz sec, c'est-à-dire sans post combustion.

Un diaphragme est généralement prévu dans le canal annulaire de ventilation, afin d'obtenir un flux de ventilation ayant un débit donné, qui est fonction de la section de passage de ce diaphragme. Habituellement, cette section de passage est déterminée de façon à ce que le débit d'air de ventilation, provenant du canal annulaire secondaire du turboréacteur et traversant le canal de ventilation / refroidissement, permette un refroidissement satisfaisant du carter de post combustion dans les conditions les plus contraignantes en terme de sollicitations thermiques, à savoir lorsque le turboréacteur fonctionne en régime plein gaz avec post combustion.

Néanmoins, cela implique que la valeur du débit du flux de ventilation du carter de post combustion est exagérément élevée dans les autres régimes de fonctionnement du turboréacteur, ce qui engendre inéluctablement un manque d'optimisation dans la gestion de l'air frais secondaire sortant du canal annulaire secondaire de ce turboréacteur.

Des configurations de la sorte sont connues des documents US 5 209 059, US 5 131 222 et US 2005/091964, le préambule de la revendication 1 étant basé sur ce dernier document.

### EXPOSÉ DE L'INVENTION

L'invention a donc pour but principal de proposer un arrière-corps pour turboréacteur d'aéronef remédiant au problème mentionné ci-dessus, relatif aux réalisations de l'art antérieur.

Pour ce faire, l'invention a pour objet un arrière-corps pour turboréacteur d'aéronef comprenant un carter de post combustion délimitant un canal de post combustion, cet arrière-corps comprenant également une chemise de protection thermique du carter de post combustion, disposée radialement intérieurement par rapport à ce dernier, et cet arrière-corps comportant en outre au moins un ensemble formant diaphragme interposé entre la chemise de protection thermique et le carter de post combustion, cet ensemble formant diaphragme définissant une section de passage destinée à être traversée par un flux de ventilation du carter de post combustion, et la chemise de protection thermique étant montée sur le carter de post combustion par l'intermédiaire d'éléments de fixation conçus pour, lorsque la chemise de protection thermique se dilate sous l'effet de contraintes thermiques, imposer un sens de déplacement angulaire de cette chemise par rapport au carter. Selon l'invention, l'ensemble formant diaphragme comporte une première et une seconde plaque annulaire se recouvrant l'une l'autre, chacune percée d'une pluralité de lumières et respectivement montées sur le carter de post combustion et la chemise de protection thermique, les lumières des deux plaques annulaires définissant conjointement la section de passage. De plus, l'ensemble formant diaphragme est conçu de sorte que la dilatation de la chemise de protection thermique sous l'effet de contraintes thermiques provoque un déplacement de la seconde plaque annulaire dans le sens de déplacement angulaire, par rapport à la première plaque annulaire, entraînant une augmentation de la grandeur de la section de passage définie par les lumières.

Ainsi, l'invention procure avantageusement un ensemble formant diaphragme à perméabilité variable, permettant donc une adaptation automatique de la valeur du débit du flux de ventilation du carter de post combustion en fonction du niveau de température régnant au sein de la partie arrière-corps du turboréacteur, ce niveau de température ayant en effet une incidence directe sur le niveau de dilatation thermique de la chemise de protection thermique portant la seconde plaque annulaire de l'ensemble formant diaphragme.

Il doit être compris que cet ensemble formant diaphragme permet le passage d'un débit plus important lorsque le niveau de dilatation thermique de la chemise de protection thermique augmente, cela étant avantageusement tout à fait concordant avec la nécessité de refroidir de façon plus intense le carter de post combustion lorsque les températures au sein de l'arrière-corps du turboréacteur sont élevées.

Le principe de l'invention repose donc sur la solidarisation de la seconde plaque annulaire avec la chemise de protection thermique, qui permet à cette plaque de suivre les déformations thermiques importantes de la chemise, et d'utiliser ainsi ces déformations afin d'obtenir une modification de la position relative entre les deux plaques, bien entendu en vu d'adapter la grandeur de la section de passage à la valeur du débit souhaité. Naturellement, le dimensionnement des éléments constitutifs de l'ensemble formant diaphragme, et en particulier la géométrie des lumières, est réalisé en effectuant des tests permettant de déterminer le déplacement thermique angulaire de la chemise de protection en fonction du niveau de température dans l'arrière-corps. De plus, pour que le débit du flux de ventilation obtenu soit au plus proche de celui désiré, il peut également être pris en compte la dilatation thermique subie par le carter de post combustion portant la première plaque annulaire de l'ensemble, même si cette dilatation parait négligeable par rapport à celle rencontrée par la chemise exposée à des températures plus élevées du fait de sa situation rapprochée du centre du canal de post combustion, et du fait de sa fonction de bouclier thermique vis-à-vis de ce même carter.

Un avantage supplémentaire spécifique à la présente invention réside dans le fait que l'élément moteur de la rotation de la seconde plaque annulaire dans le sens de déplacement angulaire est constitué par la dilatation de la chemise de protection thermique, de sorte qu'il n'est avantageusement pas nécessaire de prévoir un actionneur additionnel pour piloter la grandeur de la section de passage de l'ensemble formant diaphragme, puisque le fonctionnement se base sur les propriétés physiques de dilatation thermique de la chemise de protection. Naturellement, cela d'obtenir une fiabilité extrêmement satisfaisante pour l'ensemble formant diaphragme.

Comme cela a été évoqué ci-dessus, l'invention proposée permet d'adapter la valeur du débit au régime du turboréacteur, étant bien entendu que le débit du flux de ventilation sera plus important en régime plein gaz avec post combustion provoquant des températures très élevées au sein de l'arrière-corps, qu'en régime plein gaz sec où les températures atteintes par la chemise et le carter de post combustion sont sensiblement moins importantes.

A cet égard, la grandeur variable de la section de passage, calibrant le débit du flux de ventilation et définie conjointement par les lumières des deux plaques annulaires, est donc déterminée en fonction de la position relative des plaques annulaires l'une par rapport à l'autre, position relative qui impliquera alors une coïncidence plus ou moins importantes entre les lumières de l'une des plaques, et les lumières de l'autre des deux plaques annulaires. Il est bien évidemment précisé que plus le recouvrement des lumières entre-elles est élevé, plus la section de passage de l'ensemble formant diaphragme est de grandeur importante.

Dans les cas où l'ensemble formant diaphragme adopte une position permettant de procurer un débit du flux de ventilation inférieur à un débit maximal, l'air secondaire non utilisé pour former ce débit peut alors avantageusement être employé pour alimenter d'autres parties de l'arrière-corps du turboréacteur, et en particulier utilisé pour améliorer les performances de la post combustion en participant à l'obtention d'une meilleure confluence des flux primaire et secondaire se rejoignant au niveau de l'arrière-corps.

De préférence, les éléments de fixation sont également conçus pour, lorsque la chemise de protection thermique se dilate sous l'effet de contraintes thermiques, autoriser un déplacement radial vers l'extérieur de la chemise par rapport au carter. Dans un tel cas, l'ensemble formant diaphragme est alors conçu de sorte que la dilatation de la chemise de protection thermique sous l'effet de contraintes thermiques provoque aussi un déplacement radial vers l'extérieur de la seconde plaque annulaire, par rapport à la première plaque annulaire, entraînant une augmentation de la grandeur de la section de passage définie par les lumières.

Ainsi, l'augmentation de la section de passage de l'ensemble formant diaphragme résultant de la dilatation thermique de la chemise de protection ne s'effectue pas uniquement par un recouvrement de taille croissante des lumières dans la direction circonférentielle des plaques, mais également par un recouvrement de taille croissante des lumières dans la direction radiale vers l'extérieur. Dans tous les cas, il est rappelé que les deux mouvements de la seconde plaque dans les directions indiquées ci-dessus sont provoqués par la dilatation thermique de la chemise de protection thermique, qui constitue donc l'élément moteur de l'ensemble formant diaphragme.

De préférence, les deux plaques annulaires sont au contact l'une de l'autre, et agencées selon une direction longitudinale dudit turboréacteur. Cependant, il serait néanmoins possible de prévoir un faible jeu / écartement entre ces deux plaques disposées en regard, sans sortir du cadre de l'invention, à condition que ce jeu / écartement soit suffisamment faible pour ne pas altérer le fonctionnement de l'ensemble formant diaphragme selon lequel la section de passage de ce dernier est définie par les parties des lumières des plaques non obturées par la partie pleine de ces plaques, lorsque celles-ci sont regardées dans la direction de propagation du flux de ventilation, à savoir selon la direction longitudinale du turboréacteur correspondant également à la direction orthogonale aux plaques annulaires. De plus, on peut également prévoir un jeu à froid entre ces deux plaques, et une entrée en contact à chaud résultant d'une dilatation différentielle axiale entre la chemise de protection thermique et le carter de post combustion. Néanmoins, la dilatation thermique axiale de ces éléments étant extrêmement faible, il est effectivement préféré de prévoir un contact permanent entre la première et la seconde plaque annulaire de l'ensemble formant diaphragme.

De préférence, ces deux plaques annulaires sont disposées concentriquement selon un axe longitudinal du turboréacteur.

Toujours de manière préférentielle, la première plaque annulaire présente un premier réseau de lumières identique à un second réseau de lumières pratiqué sur la seconde plaque annulaire, les lumières du premier réseau coopérant deux à deux avec les lumières du second réseau en se recouvrant au moins partiellement. De plus, à froid, chaque lumière du premier réseau est décalée de sa lumière associée du second réseau, radialement vers l'extérieur et angulairement selon le sens de déplacement angulaire. Ainsi, il est clair qu'une fois la chemise de protection thermique soumise à des contraintes thermiques importantes, celle-ci en se dilatant va entraîner une mise en mouvement de la seconde plaque annulaire dans ledit sens de déplacement angulaire et dans la direction radiale extérieure, qui aura alors pour conséquence d'augmenter l'importance du recouvrement mutuel entre les premières et secondes lumières, et donc d'élever la grandeur de la section de passage de l'ensemble.

Préférentiellement, l'ensemble formant diaphragme est conçu de manière à pouvoir se positionner, en fonction d'un niveau de dilatation thermique de la chemise de protection thermique, entre une position de débit minimal dans laquelle la section de passage de grandeur minimale est obtenue par un recouvrement partiel des lumières de l'une des deux plaques annulaires par l'autre des deux plaques annulaires, et inversement, et une position de débit maximal dans laquelle la section de passage de grandeur maximale correspond à la totalité des lumières de l'une des deux plaques annulaires. De plus, dans le cas préféré mais non limitatif où le réseau de lumières prévu sur chacune des deux plaques est identique, la section de passage de l'ensemble en position de débit maximal correspond alors à la section de passage identique définie indépendamment par chacune des deux plaques avec son propre réseau de lumières, dans la mesure où l'on recherche une coïncidence parfaite entre les lumières des deux plaques annulaires. Ainsi, dans ce cas préféré et en position de débit maximal, les lumières de l'une des deux plaques annulaires ne sont aucunement recouvertes / obturées par l'autre des deux plaques annulaires, et inversement.

Par ailleurs, l'invention a également pour objet un turboréacteur d'aéronef comprenant un tel arrière-corps.

Enfin, l'invention a également pour objet un aéronef comprenant au moins un tel turboréacteur.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue en coupe longitudinale d'une partie arrière d'un turboréacteur selon un mode de réalisation préféré de la présente invention ;
- la figure 2a représente une vue partielle en coupe prise selon la ligne II-II de la figure 1, lorsque la chemise de protection thermique du turboréacteur est soumise à un niveau de contraintes thermiques minimal ;
- la figure 2b représente une vue partielle en coupe prise selon la ligne II-II de la figure 1, lorsque la chemise de protection thermique du turboréacteur est soumise à un niveau de contraintes thermiques maximal ;
- la figure 3 représente une vue détaillée d'une partie de celle montrée sur la figure 1, sur laquelle on peut voir l'ensemble formant diaphragme équipant le carter de post combustion ;
- la figure 4 représente une vue partielle de la première plaque annulaire appartenant à l'ensemble formant diaphragme montré sur la figure 3 ;
- la figure 5 représente une vue partielle de la seconde plaque annulaire appartenant à l'ensemble formant diaphragme montré sur la figure 3 ;
- la figure 6a représente une vue en coupe prise selon la ligne VI-VI de la figure 3, lorsque l'ensemble formant diaphragme est en position de débit minimal, adoptée automatiquement lorsque la chemise de protection thermique du turboréacteur est soumise audit niveau de contraintes thermiques minimal ; et
- la figure 6b représente une vue en coupe prise selon la ligne VI-VI de la figure 3, lorsque l'ensemble formant diaphragme est en position de débit maximal, adoptée automatiquement lorsque la chemise de protection thermique du turboréacteur est soumise audit niveau de contraintes thermiques maximal.

### EXPOSÉ DÉTAILLÉ DE MODES DE RÉALISATION PRÉFÉRÉS

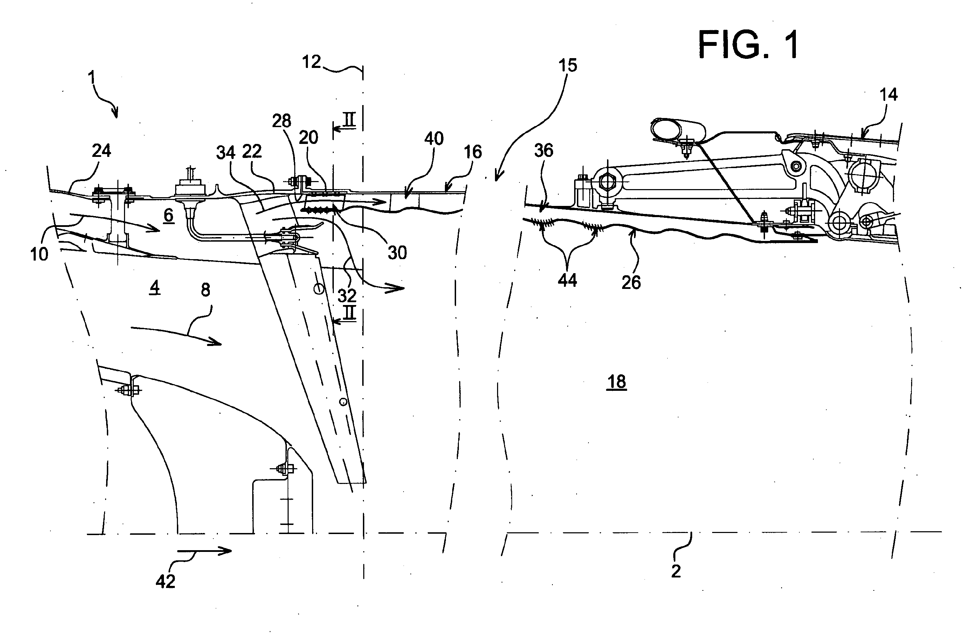

En référence tout d'abord à la figure 1, on peut apercevoir une partie arrière d'un turboréacteur 1 pour aéronef, selon un mode de réalisation préféré de la présente invention.

Sur cette figure 1, on peut donc voir la partie arrière du turboréacteur 1 s'étendant selon son axe longitudinal 2, cette partie arrière étant également connue sous l'appellation arrière-corps par l'homme du métier.

Au niveau d'une partie amont de cet arrière-corps, le turboréacteur 1 présente un canal primaire référencé 4, entouré d'un canal annulaire secondaire 6, ces canaux 4, 6 étant respectivement traversés par un flux primaire 8 et un flux secondaire 10 essentiellement constitué d'air frais. Les flux primaire 8 et secondaire 10 sont destinés à se mélanger au niveau d'une partie plus arrière du turboréacteur, dénommée partie de post combustion et se situant globalement en aval par rapport au plan fictif 12 montré schématiquement sur la figure 1. A ce titre, il est indiqué que le mélange précité s'effectue à l'aide de bras mélangeurs rapportés sur un carter extérieur 24 du turboréacteur et s'étendant radialement vers l'intérieur depuis celui-ci, comme cela est clairement montré sur la figure 1. Sur cette figure, on peut voir que les bras mélangeurs (non référencés) interceptent le plan transversal fictif 12.

Il est noté que cette partie de post combustion, constituant la partie la plus aval du moteur et se terminant par des volets de tuyère 14, comporte un carter de post combustion 16 délimitant un canal de post combustion 18 centré sur l'axe 2 du turboréacteur. A titre indicatif, ce carter 16 est monté sur le carter extérieur 24 du canal annulaire secondaire 6 par l'intermédiaire d'une bride de fixation 20, qui est donc rapportée fixement à une bride de fixation 22 située en amont de celle-ci et prolongeant ledit carter extérieur 24 du canal annulaire secondaire 6 vers l'aval. De plus, la bride de fixation 20 prolonge vers l'amont le carter de post combustion 16, comme le montre la figure 1.

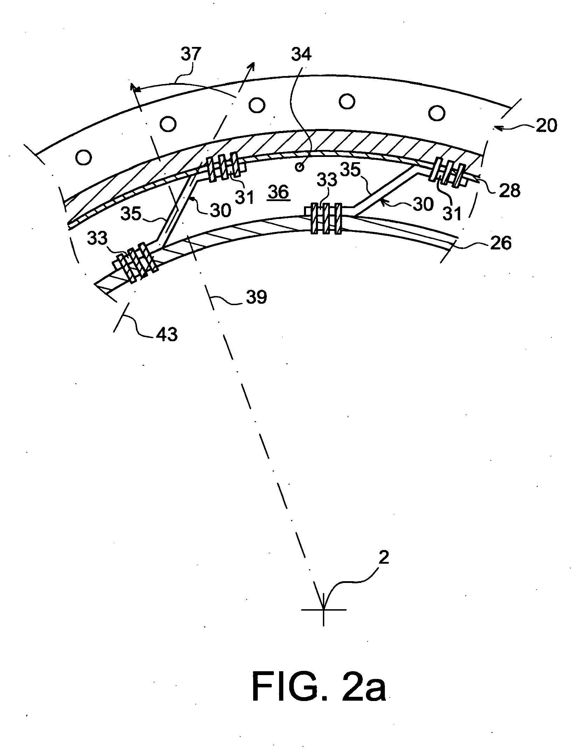

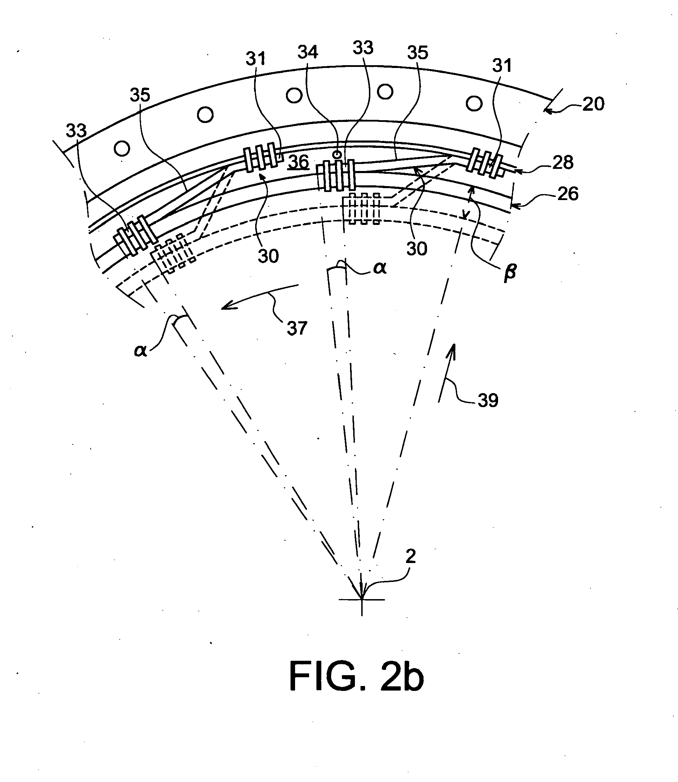

Afin d'opérer un refroidissement de ce carter de post combustion 16, il est placé une chemise de protection thermique 26 selon l'axe 2, de sorte que la chemise 26 et le carter 16 forment conjointement un canal annulaire de refroidissement de ce carter, tel que cela est connu de l'homme du métier. Ainsi, la chemise de protection thermique 26 s'étend de l'amont vers l'aval depuis la bride de fixation 20, jusqu'à proximité des volets de tuyère 14, comme cela est clairement visible sur la figure 1. Cette chemise de protection thermique 26, qui est donc rapportée radialement vers l'intérieur par rapport au carter de post combustion 16, est fixée à ce même carter 16 par l'intermédiaire d'une bride de fixation intermédiaire 28 agencée entre les deux brides 20, 22 précitées. En effet, la chemise de protection thermique dispose au niveau de son extrémité amont d'une pluralité d'éléments de fixation 30 rapportés fixement sur celle-ci ainsi que sur cette même bride de fixation intermédiaire 28. A titre indicatif, il peut s'agir d'éléments de fixation du type pontets en Z qui permettent de par leur conception d'accompagner la chemise de protection thermique dans son mouvement tel que rencontré suite à une dilatation thermique importante la rapprochant sensiblement du carter de post combustion 16, comme cela sera explicité plus en détails en référence aux figures 2a et 2b. Tel que cela est connu de l'homme du métier, ces éléments de fixation 30 sont disposés de façon régulière tout autour de l'axe 2, entre cette chemise de protection 26 et la bride circulaire intermédiaire 28 dont la partie fixant les éléments 30 se situe radialement vers l'intérieur par rapport à la bride de fixation 20 du carter de post combustion 16.

Ainsi, le flux d'air frais secondaire 10 sortant du canal annulaire secondaire 6 se sépare en deux flux distincts parmi lesquels on retrouve un flux d'air frais 32 pénétrant au sein du canal de post combustion 18 afin de s'y mélanger avec le flux d'air primaire 8, ainsi qu'un flux de ventilation 34 pénétrant au sein du canal annulaire de refroidissement 36, et servant au refroidissement du carter 16 tel que cela a été mentionné ci-dessus. La répartition des deux flux 32, 34 issus du même flux d'air frais secondaire 10 s'effectue grâce à la présence d'au moins un ensemble formant diaphragme 40 situé au sein du canal annulaire 36 de refroidissement, et de préférence au niveau d'une portion amont de celui-ci, c'est-à-dire à proximité des éléments de fixation 30. A cet égard, il est noté que dans le mode de réalisation préféré décrit, seul un ensemble formant diaphragme 40 est prévu au sein du canal annulaire de refroidissement 36. Néanmoins, il serait possible d'en prévoir plusieurs espacés selon la direction longitudinale du turboréacteur référencée par la flèche 42 et étant parallèle à l'axe 2, en fonction des besoins rencontrés.

Dans un tel cas, si l'ensemble formant diaphragme 40 situé le plus en amont définit le débit global de flux de ventilation qui traversera le canal annulaire de refroidissement 36, il est noté que ceux situés plus en aval peuvent par exemple être disposés en fonction du film d'air de protection thermique que l'on cherche à obtenir au niveau de la paroi interne de la chemise de protection 26, film qui est autorisé grâce à la présence d'une multiperforation 44 pratiquée sur cette même chemise 26, et de préférence au niveau des portions radiales les plus intérieures tel que cela est montré sur la figure 1.

En référence donc aux figures 2a et 2b, on peut voir de façon plus précise les éléments de fixation 30 établissant la jonction mécanique entre la chemise 26 et le carter de post combustion, et plus spécifiquement sa bride de fixation 20.

Globalement, ces éléments 30 de préférence identiques présentent une conception permettant à la chemise de protection thermique 26, lorsqu'elle se dilate sous l'effet de contraintes thermiques émanant de la chaleur issue du canal de post combustion 18, de se déplacer radialement vers l'extérieur en direction du carter de post combustion qui subit quant à lui un déplacement thermique dans la même direction, mais qui est relativement négligeable en comparaison avec celui associé à la chemise. De plus, lors de ce déplacement thermique radial de la chemise par rapport au carter, la chemise subit également un déplacement angulaire par rapport à ce même carter, sensiblement selon l'axe 2 et dans un sens de déplacement angulaire 37 imposé par la conception des éléments de fixation 30.

Plus précisément, chaque élément de fixation 30 comporte une patte de fixation 31 du carter de post combustion montée fixement sur la bride 28, une patte de fixation 33 de la chemise montée fixement sur celle-ci, et une patte de jonction 35 raccordant les deux pattes de fixation 31, 33 précitées. Ainsi, en fonction de l'inclinaison de la patte de jonction 35 par rapport à une direction radiale 39 du turboréacteur vers l'extérieur, le sens de déplacement angulaire 37 sera imposé à la chemise 26 lors de la dilatation thermique de cette dernière.

Dans le mode de réalisation préféré montré sur les figures 2a et 2b, on peut voir que la patte de jonction 35 des éléments de fixation 30 est agencée de manière à s'étendre globalement selon une direction principale 43 vers l'extérieur, c'est-à-dire allant de son extrémité inférieure vers son extrémité supérieure. Comme on le voit sur la figure 2a, la direction radiale vers l'extérieur 39 traversant cette patte de jonction 35 est décalée d'un angle aigu dans le sens anti-horaire par rapport à cette direction principale 43. En d'autres termes, le passage de la direction 43 à la direction 39, toutes les deux orientées de la façon précitée, s'effectue selon un angle aigu dans le sens anti-horaire. C'est alors précisément ce sens anti-horaire défini par le décalage angulaire entre les directions 39, 43 qui impose ledit sens de déplacement angulaire 37 de la chemise 26 lorsque celle-ci se dilate.

Par conséquent, lorsque l'on passe d'un état dans lequel la chemise de protection thermique est soumise à un niveau de contraintes thermiques minimal tel que représenté sur la figure 2a, impliquant un éloignement radial sensible entre la chemise et le carter, à un état dans lequel la chemise de protection thermique est soumise à un niveau de contraintes thermiques maximal tel que représenté sur la figure 2b, on peut s'apercevoir grâce aux pointillés représentés sur cette dernière figure que la chemise 26 est non seulement déplacée dans la direction radiale extérieure 39 par rapport au carter de post combustion, mais également déplacée par rapport à ce même carter dans la direction circonférentielle selon le sens de déplacement angulaire 37. Néanmoins, il est noté que la répartition régulière des éléments de fixation 30 autour de l'axe 2 implique que la chemise 26 conserve son centrage sur ce même axe longitudinal 2 du turboréacteur, quel que soit le niveau de contraintes thermiques qui lui est appliqué.

A titre indicatif, le déplacement angulaire de la chemise 26 selon le sens 37 est représenté par la référence α sur la figure 2b, tandis que son déplacement radial dans la direction 39 est représenté par la référence β sur cette même figure 2b. A cet égard, il est rappelé que le carter de post combustion est également susceptible de subir un déplacement radial dans la direction 39 lors de sa dilatation thermique, déplacement qui n'a pas été représenté pour des raisons de clarté, et qui reste habituellement négligeable par rapport à celui de la chemise 26.

En outre, il est indiqué que le rapport entre les déplacements radial et angulaire subis par la chemise lors de sa dilatation thermique est conditionné par la longueur et l'inclinaison initiale, c'est-à-dire à froid, de la patte de jonction 35, que l'homme du métier pourra alors fixer en fonction des besoins rencontrés.

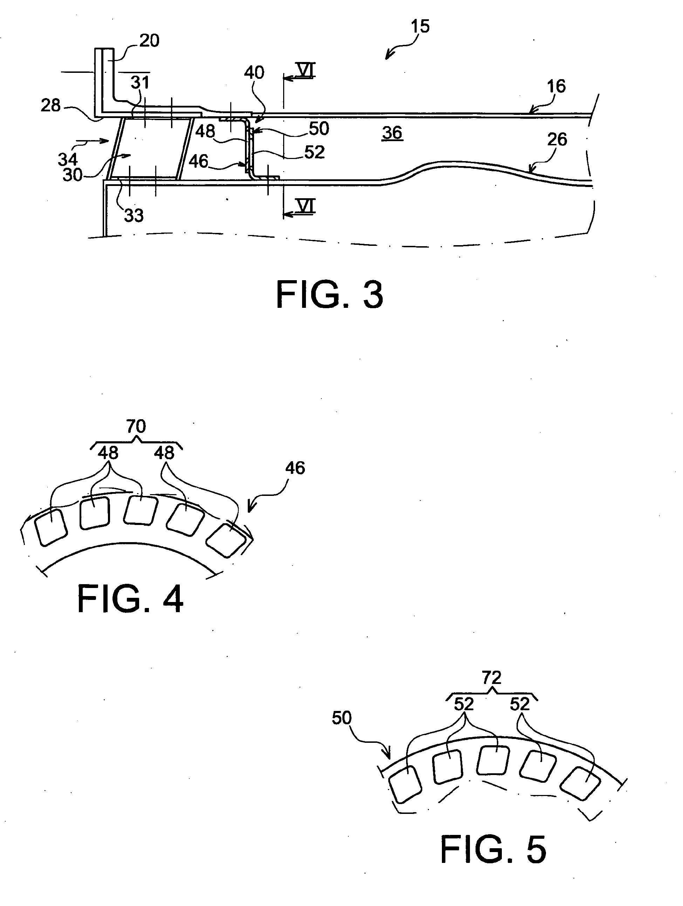

L'ensemble formant diaphragme 40 étant spécifique à la présente invention, il va à présent être décrit en détail en référence aux figures 3 à 6b.

En référence tout d'abord à la figure 3, on peut voir que l'ensemble formant diaphragme 40 comporte principalement une première plaque annulaire 46 percée d'une pluralité de lumières 48, ainsi que d'une seconde plaque 50 percée quant à elle d'une pluralité de lumières 52. Plus précisément, la première plaque annulaire, centrée sur l'axe longitudinal du turboréacteur 1, est montée fixement sur le carter de post combustion 16, sa partie radiale interne incorporant les lumières 48 faisant saillie à l'intérieur du canal annulaire de refroidissement 36. Ainsi, cette première plaque annulaire 46, située la plus en amont, dispose d'un premier réseau de lumières 48 à travers lesquelles le flux de ventilation 34 doit nécessairement transiter pour pouvoir poursuivre son chemin vers la direction aval du turboréacteur 1.

D'autre part, la seconde plaque percée 50 est quant à elle montée fixement sur la chemise de protection thermique 26, sa partie radiale interne comportant des lumières 52 faisant saillie à l'intérieur du canal annulaire de refroidissement 36. Les deux plaques 46, 50, en contact l'une avec l'autre mais qui pourraient éventuellement être écartées d'un faible jeu, peuvent donc se déplacer relativement l'une par rapport à l'autre en rotation selon l'axe 2 et radialement, comme cela sera exposé ci-après.

De plus, il est noté que le flux de ventilation 34 doit par conséquent également transiter par le second réseau de lumières 52 pour poursuivre son cheminement vers l'aval.

En référence à présent à la figure 4, on peut voir une partie de la première plaque annulaire 46 équipée de la pluralité de lumières 48, formant conjointement le premier réseau de lumières 70. Comme cela est visible sur la figure 4, les lumières 48 sont réparties angulairement de manière régulière autour de l'axe du turboréacteur, et disposent de préférence toutes d'une même géométrie, c'est-à-dire d'une même forme et de mêmes dimensions. A ce propos, ces lumières traversant la plaque 46 peuvent globalement prendre la forme d'un carré, d'un rectangle ou d'un parallélogramme aux bords arrondis. Bien entendu, d'autres formes sont également envisageables pour ces lumières 48, sans sortir du cadre de l'invention.

En référence à la figure 5, on peut voir que la seconde plaque annulaire 50 dispose d'un second réseau 72 de lumières 52 qui est identique au premier réseau formé sur la première plaque annulaire 46. Cela veut dire que dans ce mode de réalisation préféré, le nombre, la forme, et les dimensions des lumières 48, 52 sont identiques, de sorte qu'en positionnant judicieusement les deux plaques 46, 50 l'une par rapport à l'autre, il est possible d'obtenir une coïncidence parfaite deux à deux des première lumières 48 et des secondes lumières 52, comme cela sera expliqué ci-après.

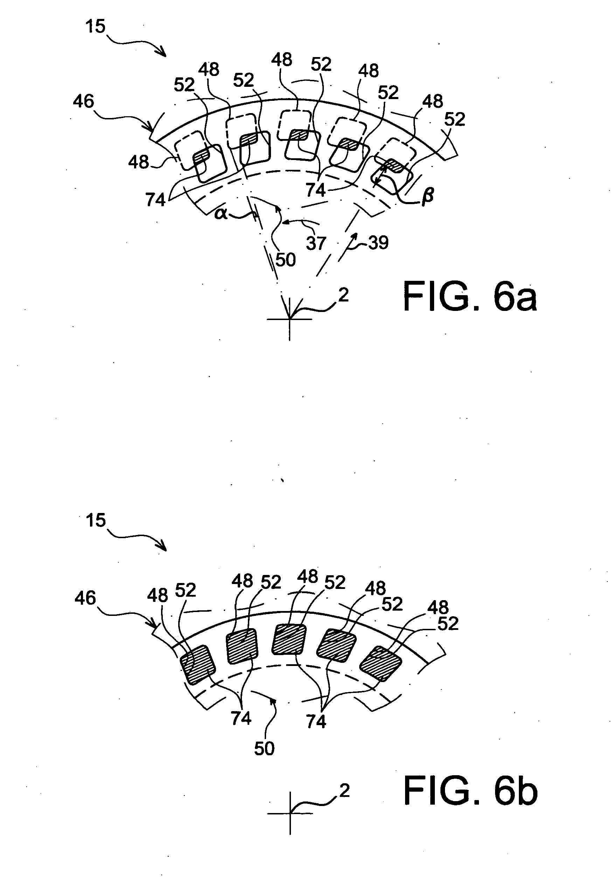

L'une des principales particularités de la présente invention réside dans le fait que l'ensemble formant diaphragme 40 définit à l'aide des premières et secondes lumières 48, 52 une section de passage dont la grandeur conditionne bien évidemment l'importance du débit du flux de ventilation 34 empruntant le canal annulaire de refroidissement 36. Comme cela ressort clairement de ce qui précède, la section de passage de l'ensemble 40 est uniquement constituée par les zones superposées des lumières 48, 52, vues selon la direction de l'axe longitudinal 2 comme cela apparaît sur la figure 6a.

A cet égard, il est noté que sur la figure 6a, l'ensemble formant diaphragme 40 est montré dans une position de débit minimal dans laquelle la section de passage de grandeur minimale est obtenue par un recouvrement partiel des lumières 48 par la plaque 50, et par un recouvrement partiel de lumières 52 par la plaque 46. De ce fait, la section de passage référencée 74 est constituée par les parties des lumières 48, 52 qui ne sont pas obturées par l'autre plaque, comme cela est schématisé par les zones hachurées de la figure 6a symbolisant la section de passage de l'ensemble 40. En d'autres termes, on peut alors considérer que la section de passage 74 correspond exclusivement aux zones de recouvrement mutuel entre les lumières 48 de la première plaque 46 et les lumières 52 de la seconde plaque 50. Bien entendu, dans ce cas où la position relative des deux plaques est prévue pour assurer un débit minimal du flux de ventilation 34, la section de passage 74 est donc inférieure à une section de passage associée à chacune des deux plaques 46, 50, et définie par ses propres lumières 48, 52.

Cette position de l'ensemble 40 correspond également à un état dans lequel la chemise de protection est soumise à un niveau de contraintes thermiques minimal, tel que mentionné ci-dessus en référence à la figure 2a.

Ainsi, on peut donc apercevoir que dans cette configuration de faible débit, identique ou similaire à celle rencontrée à froid, chaque lumière 48 du premier réseau 70 est décalée de sa lumière associée 52 appartenant au second réseau 72, radialement vers l'extérieur selon la direction 39 de la valeur β, et angulairement selon le sens de déplacement angulaire 37 de la valeur α.

Dans ce mode de réalisation préféré, on prévoit que l'ensemble formant diaphragme 40 peut être amené automatiquement dans une position de débit maximal dans laquelle la section de passage 74 de grandeur maximale correspond alors à la totalité des lumières 48, 52 de l'une quelconque des deux plaques 50, 48. Effectivement, il est prévu que la seconde plaque 50 solidaire de la chemise 26 soit mise en mouvement selon le sens de déplacement angulaire 37 et selon la direction radiale extérieure 39, du simple fait de la dilatation thermique subie par la chemise, qui constitue alors l'élément moteur de l'ensemble 40.

Lors d'une telle dilatation, la chemise 26 se déplace sous l'effet de contraintes thermiques émanant du canal de post combustion 18, en entraînant avec elle la seconde plaque 50 dans le sens de déplacement angulaire 37 et dans la direction radiale extérieure 39. Cela a alors pour conséquence d'élargir progressivement la zone de recouvrement mutuel des lumières 48, 52, pour atteindre une coïncidence totale telle que montrée sur la figure 6b, permettant donc d'obtenir une section de passage 74 de grandeur identique à la grandeur de la section de passage associée à chacune des deux plaques 46, 50.

A titre indicatif, il est précisé que dans le cas où il serait effectivement prévu d'obtenir une coïncidence totale entre les lumières 48, 52 en position de débit maximal, sans négliger la dilatation thermique radiale du carter de post combustion, l'écartement initial radial montré sur la figure 6a entre les lumières 48 et 52 devrait alors naturellement être fixé à une valeur légèrement inférieure à la valeur β du déplacement thermique radial de la chemise, schématisé sur la figure 2b, entre les deux positions de débit minimal et de débit maximal.

L'ensemble formant diaphragme 40 peut être amenée automatiquement, en fonction du niveau de contraintes thermiques appliqué à la chemise 26, et donc en fonction du niveau de dilatation thermique de cette même chemise, dans une position intermédiaire quelconque entre celles de débit maximal et de débit minimal représentées sur les figures 6a et 6b, correspondant respectivement à une position dans laquelle les lumières 48, 52 ne se recouvrent que très partiellement deux à deux, et à une position dans laquelle les lumières 48, 52 se recouvrent parfaitement deux à deux, comme le montrent les zones hachurées sur la figure 6b symbolisant la section de passage 74 de l'ensemble formant diaphragme 40.

De plus, il est indiqué que l'invention porte naturellement sur le turboréacteur 1, mais qu'un autre objet de l'invention concerne l'arrière-corps pour turboréacteur d'aéronef référencé par la référence numérique globale 15 sur les figures. A cet égard, il est noté que cet arrière-corps s'étend également dans la direction longitudinale 42, en étant centré sur l'axe longitudinal 2.

Bien entendu, diverses modifications peuvent être apportées par l'homme du métier à l'invention qui vient d'être décrite, uniquement à titre d'exemple non limitatif.

## Revendications

1. Arrière-corps (15) pour turboréacteur (1) d'aéronef comprenant un carter de post combustion (16) délimitant un canal de post combustion (18), l'arrière-corps (15) comprenant également une chemise de protection thermique (26) du carter de post combustion, disposée radialement intérieurement par rapport à ce dernier, et l'arrière-corps (15) comportant en outre au moins un ensemble formant diaphragme (40) interposé entre ladite chemise de protection thermique (26) et ledit carter de post combustion (16), cet ensemble formant diaphragme (40) définissant une section de passage (74) destinée à être traversée par un flux de ventilation (34) du carter de post combustion (16), ladite chemise de protection thermique (26) étant montée sur ledit carter de post combustion (16) par l'intermédiaire d'éléments de fixation (30) conçus pour, lorsque ladite chemise de protection thermique (26) se dilate sous l'effet de contraintes thermiques, imposer un sens de déplacement angulaire (37) de cette chemise par rapport audit carter (16), ledit ensemble formant diaphragme (40) comporte une première (46) et une seconde plaque annulaire (50) se recouvrant l'une l'autre, chacune percée d'une pluralité de lumières (48, 52), lesdites lumières des deux plaques annulaires définissant conjointement ladite section de passages (74), caractérisé en que lesdites premiére et seconde plaques annulaires (46,50) sont respectivement montées sur ledit carter de post combustion (16) et ladite chemise de protection thermique (26), et en ce que ledit ensemble formant diaphragme (40) est conçu de sorte que la dilatation de la chemise de protection thermique (26) sous l'effet de contraintes thermiques provoque un déplacement de ladite seconde plaque annulaire (50) dans ledit sens de déplacement angulaire (37), par rapport à ladite première plaque annulaire (46), entraînant une augmentation de la grandeur de ladite section de passage (74) définie par les lumières.

2. Arrière-corps (15) selon la revendication 1, **caractérisé en ce que** lesdits éléments de fixation (30) sont également conçus pour, lorsque ladite chemise de protection thermique (26) se dilate sous l'effet de contraintes thermiques, autoriser un déplacement radial vers l'extérieur de ladite chemise par rapport audit carter (16), et **en ce que** ledit ensemble formant diaphragme (40) est conçu de sorte que la dilatation de la chemise de protection thermique (26) sous l'effet de contraintes thermiques provoque aussi un déplacement radial vers l'extérieur de ladite seconde plaque annulaire (50), par rapport à ladite première plaque annulaire (46), entraînant une augmentation de la grandeur de ladite section de passage (74) définie par les lumières.

3. Arrière-corps (15) selon la revendication 1 ou la revendication 2, **caractérisé en ce que** lesdites deux plaques annulaires (46, 50) sont au contact l'une de l'autre, et agencées selon une direction longitudinale (42) dudit turboréacteur.

4. Arrière-corps (15) selon l'une quelconque des revendications précédentes, **caractérisé en ce que** lesdites deux plaques annulaires (46, 50) sont disposées concentriquement selon un axe longitudinal (2), dudit turboréacteur.

5. Arrière-corps (15) selon l'une quelconque des revendications précédentes, **caractérisé en ce que** ladite première plaque annulaire (46) présente un premier réseau (70) de lumières (48) identique à un second réseau (72) de lumières (52) pratiqué sur ladite seconde plaque annulaire (50), lesdites lumières (48) du premier réseau coopérant deux à deux avec lesdites lumières (52) dudit second réseau en se recouvrant au moins partiellement, et **en ce qu'**à froid, chaque lumière (48) du premier réseau (70) est décalée de sa lumière associée (52) du second réseau (72), radialement vers l'extérieur et angulairement selon ledit sens de déplacement angulaire (37).

6. Arrière-corps (15) selon l'une quelconque des revendications précédentes, **caractérisé en ce que** ledit ensemble formant diaphragme (40) est conçu de manière à pouvoir se positionner, en fonction d'un niveau de dilatation thermique de ladite chemise de protection thermique (26), entre une position de débit minimal dans laquelle la section de passage (74) de grandeur minimale est obtenue par un recouvrement partiel des lumières (48, 52) de l'une des deux plaques annulaires par l'autre des deux plaques annulaires, et inversement, et une position de débit maximal dans laquelle la section de passage (74) de grandeur maximale correspond à la totalité des lumières (48, 52) de l'une des deux plaques annulaires (46, 50).

7. Turboréacteur (1) pour aéronef comprenant un arrière-corps (15) selon l'une quelconque des revendications précédentes.

8. Aéronef comprenant au moins un turboréacteur (1) selon la revendication 7.

## Claims

1. An afterbody for an aircraft turbojet engine comprising an afterburner casing delimiting an afterburner duct, the afterbody also comprising a liner for the thermal protection of the afterburner casing that is arranged radially to the inside with respect to this casing, and the afterbody additionally including at least one diaphragm-forming assembly interposed between said thermal protection liner and said afterburner casing, this diaphragm-forming assembly defining a flow area intended to be traversed by a stream for ventilating the afterburner casing, said thermal protection liner being mounted on said afterburner casing by way of fastening elements which are designed to impose a direction of angular displacement on this thermal protection liner with respect to said casing when said liner expands under the effect of thermal stresses, wherein said diaphragm-forming assembly includes a first and second annular plate overlapping one another, each being perforated with a plurality of apertures and being mounted on said afterburner casing and said thermal protection liner respectively, said apertures in the two annular plates jointly defining said flow area, and wherein said diaphragm-forming assembly is designed such that the expansion of the thermal protection liner under the effect of thermal stresses causes a displacement of said second annular plate in said direction of angular displacement with respect to said first annular plate, leading to an increase in the size of said flow area defined by the apertures.

2. The afterbody as claimed in claim 1, wherein said fastening elements are likewise designed to allow an outward radial displacement of said thermal protection liner with respect to said casing when said liner expands under the effect of thermal stresses, and wherein said diaphragm-forming assembly is designed such that the expansion of the thermal protection liner under the effect of thermal stresses also causes an outward radial displacement of said second annular plate with respect to said first annular plate, leading to an increase in the size of said flow area defined by the apertures.

3. The afterbody as claimed in claim 1 or claim 2, wherein said two annular plates are in contact with one another and arranged in a longitudinal direction of said turbojet engine.

4. The afterbody as claimed in any one of the preceding claims, wherein said two annular plates are arranged concentrically about a longitudinal axis of said turbojet engine.

5. The afterbody as claimed in any one of the preceding claims, wherein said first annular plate has a first network of apertures which is identical to a second network of apertures made in said second annular plate, said apertures of the first network cooperating in pairs with said apertures of said second network with an at least martial overlap, and wherein, in the cold state, each aperture of the first network is offset radially outwardly and angularly in said direction of angular displacement with respect to its associated aperture of the second network.

6. The afterbody as claimed in any one of the preceding claims, wherein said diaphragm-forming assembly is designed in such a way that it can be positioned, dependent on a level of thermal expansion of said thermal protection liner, between a minimum throughput position in which the flow area of minimum size is obtained by the apertures in one of the two annular plates being partially overlapped by the other of the two annular plates, and vice versa, and a maximum throughput position in which the flow area of maximum size corresponds to all the apertures in one of the two annular plates.

7. An aircraft turbojet engine comprising an afterbody as claimed in any one of the preceding claims.

8. An aircraft comprising at least one turbojet engine as claimed in claim 7.

## Patentansprüche

1. Hinter-Körper (15) für TL-Triebwerke (1) von Flugzeuge, welcher ein Nachbrenner-Gehäuse (16) umfasst, das einen Nachbrennerkanal (18) umgrenzt, wobei der Hinter-Körper (15) außerdem einen Wärmeschutzmantel (26) des Nachbrenner-Gehäuses (16) umfasst, der radial gesehen innerhalb von diesem angeordnet ist, und wobei der Hinter-Körper (15) ferner mindestens eine als Drosselblende funktionierende Anordnung (40) umfasst, die zwischen dem Wärmeschutzmantel (26) und dem Nachbrenner-Gehäuse (16) angeordnet ist, wobei diese als Drosselblende funktionierende Anordnung (40) einen Durchgangsquerschnitt (74) herstellt, der dazu bestimmt ist, dass ein Belüftungsstrom (34) für das Nachbrenner-Gehäuse (16) hindurch strömt, wobei der Wärmeschutzmantel (26) an dem Nachbrenner-Gehäuse (16) vermittels Befestigungselementen (30) angebracht ist, die dergestalt ausgeführt sind, dass sie, wenn der Wärmeschutzmantel (26) sich unter der Einwirkung von Wärmespannungen ausdehnt, eine Winkelverschiebungsrichtung (37) dieses Mantels gegenüber dem Gehäuse (16) bewirkt, wobei die als Drosselblende funktionierende Anordnung (40) eine erste ringförmige Platte (46) und eine zweite ringförmige Platte (50) umfasst, welche sich gegenseitig überdecken, wobei jede von ihnen eine Mehrzahl von durchgehenden Öffnungen (48, 52) aufweist, wobei diese Öffnungen der beiden ringförmigen Platten zusammen den genannten Durchgangsquerschnitt (74) bilden,
**dadurch gekennzeichnet,**
**dass** diese erste und diese zweite ringförmige Platte (46, 50) an dem Nachbrenner-Gehäuse (16) bzw. an dem Wärmeschutzmantel (26) angebracht sind und dass die als Drosselblende funktionierende Anordnung (40) dergestalt ausgeführt ist, dass die Ausdehnung des Wärmeschutzmantels (26) unter der Einwirkung von Wärmespannungen eine Verschiebung der zweiten ringförmigen Platte (50) gegenüber der ersten ringförmigen Platte (46) in der genannten Winkelverschiebungsrichtung (37) hervorruft, was eine Vergrößerung des genannten von den Öffnungen gebildeten Durchgangsquerschnitts (74) nach sich zieht.

2. Hinter-Körper (15) nach Anspruch 1,
**dadurch gekennzeichnet,**
**dass** diese Befestigungselemente (30) ebenfalls so ausgeführt sind, dass sie, wenn dieser Wärmeschutzmantel (26) sich unter der Einwirkung von Wärmespannungen ausdehnt, eine radiale Verschiebung dieses Mantels gegenüber dem Gehäuse (16) nach außen zulassen, und dass die als Drosselblende funktionierende Anordnung (40) dergestalt ausgeführt ist, dass die Ausdehnung des Wärmeschutzmantels (26) unter der Einwirkung von Wärmespannungen auch eine radiale Verschiebung der zweiten ringförmigen Platte (50) gegenüber der ersten ringförmigen Platte (46) nach außen hervorruft, was eine Vergrößerung des genannten von den Öffnungen gebildeten Durchgangsquerschnitts (74) nach sich zieht.

3. Hinter-Körper (15) nach Anspruch 1 oder Anspruch 2,
**dadurch gekennzeichnet,**
**dass** sich die beiden ringförmigen Platten (46, 50) in Kontakt miteinander befinden und bezogen auf eine Längsrichtung (42) des genannten TL-Triebwerks angeordnet sind.

4. Hinter-Körper (15) nach einem der vorherigen Ansprüche,
**dadurch gekennzeichnet,**
**dass** die beiden ringförmigen Platten (46, 50) konzentrisch auf einer Längsachse (2) dieses TL-Triebwerks angeordnet sind.

5. Hinter-Körper (15) nach einem der vorherigen Ansprüche,
**dadurch gekennzeichnet,**
**dass** die erste ringförmige Platte (46) ein erstes Netz (70) von Öffnungen (48) aufweist, das einem zweiten Netz (72) von Öffnungen (52) gleicht, das in der zweiten ringförmigen Platte (50) ausgeführt ist, wobei die Öffnungen (48) des ersten Netzes paarweise mit den Öffnungen (52) dieses zweiten Netzes zusammenwirken, indem sie sich zumindest teilweise überdecken, und dass bei kaltem Triebwerk jede Öffnung (48) des ersten Netzes (70) gegenüber der ihm zugeordneten Öffnung (52) des zweiten Netzes (72) radial nach außen und winkelmäßig in der genannten Winkelverschiebungsrichtung (37) verschoben ist.

6. Hinter-Körper (15) nach einem der vorherigen Ansprüche,
**dadurch gekennzeichnet,**
**dass** die als Drosselblende funktionierende Anordnung (40) dergestalt ausgeführt ist, dass sie sich in Abhängigkeit von einem Grad der Wärmedehnung des Wärmeschutzmantels (26) zwischen einer Stellung des Minimaldurchflusses, bei der der Minimal-Durchgangsquerschnitt (74) durch eine Teilüberdeckung der Öffnungen (48, 52) der einen der beiden ringförmigen Platten durch die der anderen der beiden ringförmigen Platten und umgekehrt erreicht wird, und einer Stellung des Maximaldurchflusses, bei der der Maximal-Durchgangsquerschnitt (74) den vollständigen Öffnungen (48, 52) der einen der beiden ringförmigen Platten (46, 50) entspricht, positionieren kann.

7. TL-Triebwerk (1) für Flugzeuge, das einen Hinter-Körper (15) nach einem der vorherigen Ansprüche aufweist.

8. Flugzeug mit mindestens einem TL-Triebwerk (1) nach Anspruch 7.
